Europäisches Patentamt

(19) European Patent Office   (11) Numéro de publication: **0 159 961**

Office européen des brevets   **B1**

(12) # FASCICULE DE BREVET EUROPÉEN

(45) Date de publication du fascicule du brevet:   (51) Int. Cl.⁴: **B 01 D 29/46**
**12.10.88**

(21) Numéro de dépôt: **85810118.1**

(22) Date de dépôt: **20.03.85**

(54) Filtre à anneaux superposés pour liquides.

(30) Priorité: **29.03.84 CH 1595/84**

(43) Date de publication de la demande:
**30.10.85 Bulletin 85/44**

(45) Mention de la délivrance du brevet:
**12.10.88 Bulletin 88/41**

(84) Etats contractants désignés:
**AT BE CH DE FR GB IT LI LU NL SE**

(56) Documents cité:
**CH-A-139 793**
**DE-C-669 974**
**FR-A-1 279 016**
**FR-A-2 519 262**
**GB-A-1 110 179**
**US-A-1 804 512**
**US-A-4 430 232**

(73) Titulaire: **Doucet, Charles, 13, Avenue Léonard
Sismondi, CH- 1224 Chêne- Bougeries/Genève (CH)**

(72) Inventeur: **Doucet, Charles, 13, Avenue Léonard
Sismondi, CH- 1224 Chêne- Bougeries/Genève (CH)**

(74) Mandataire: **Vuille, Roman, c/o KIRKER & Cie
S.A. 14, rue du Mont- Blanc Case Postale 872,
CH- 1211 Genève 1 (CH)**

**Description**

On a décrit dans le brevet USA No 4 430 232, du même inventeur, un filtre à disques pour liquides, du type à nettoyage à contre-courant, qui comprend une série d'éléments de filtration de forme annulaire, coaxiaux, constituant un ensemble de forme générale cylindrique et laissant entre eux des passages de filtration annulaires s'étendant radialement par rapport à l'axe du filtre. A l'expérience, ce filtre a présenté les inconvénients suivants:

Pendant le passage de l'eau à travers le filtre, aussi bien én phase de filtration qu'en phase de nettoyage, les éléments filtrants vibrent de façon intense;

Cette vibration des éléments de filtration produit un bruit désagréable;

Cette vibration produit aussi une usure anormale des éléments de filtration, par abrasion sous l'action des impuretés en suspension dans le liquide et retenues dans le filtre;

Cette vibration produit en outre un effet de broyage des impuretés, dont le calibre diminue alors, ce qui permet à ces impuretés ainsi réduites à un plus petit calibre, de passer à travers le filtre alors qu'il serait préférable de les retenir, en évitant cette action de broyage;

Cette vibration produit encore un changement de la structure cristalline des soudures, qui rend celles-ci fragiles et sujettes à se casser.

Par contre, ces vibrations ont l'avantage d'assurer un nettoyage parfait du filtre, en un temps très court, de l'ordre de quelques secondes seulement.

Le filtre décrit dans le brevet antérieur cité a rélévé aussi les particularités de fonctionnement suivantes:

Lorsque du liquide circule à vitesse normale à son intérieur, ce liquide ne pénètre pratiquement que dans les fentes radiale de l'extrémité aval. Cela n'est pas un grave inconvénient durant la phase de filtration car si, au début, le filtre se colmate dans la région aval, la filtration continue progressivement sur toute la longueur du filtre. Par contre, lors du nettoyage à contre-courant, le nettoyage ne se produit, pratiquement, que vers l'extrémité aval, ce qui limite sérieusement la longueur que l'on peut donner à un tel filtre. On peut remédier dans une certaine mesure à cet inconvénient en disposant dans le filtre une ou plusieurs chicanes ou déflecteurs dont la fonction est de répartir le liquide aussi uniformément que possible sur toute la longuer du filtre. Il en résulte une complication de la construction. De plus, les soudures grâce auxquelles ces déflecteurs sont fixés à la tige centrale du filtre sont sujettes à rupture sous l'effet des vibrations mentionnées plus haut.

On connait aussi par le document FR-A-2 519 262 un filtre à disques du type déjà mentionné mais dans lequel les passages de filtration annulaires ont une partie oblique par rapport à l'axe du filtre et dans lequel des moyens de butée sont prévus sur chaque élément de filatration pour appuyer sur un élément du filtration voisin sous l'effet d'une pression exercée sur ces éléments lorsque le filtré est en régime de filtration. Ce filtre présente également l'inconvénient d'un nettoyage insuffisant.

La présente invention vise à fournir un filtre très amélioré, qui soit exempt des inconvénients du filtre antérieur cité au début, mais qui en conserve tous les avantages. Elle a pour objet un filtre qui est conforme à la revendication 1.

Les dessins annexés représentent, à titre d'exemple, une forme d'exécution du filtre selon l'invention.

Fig. 1 en est une vue d'ensemble, en coupe axiale, longitudinale.

Fig. 1a est une vue de détail relative à la fig. 1.

Fig. 2 est une vue en bout de l'ensemble des éléments filtrants, abstraction faite des autres parties du filtre.

Fig. 3 est une vue en coupe partielle, selon un plan radial, montrant à plus grande échelle la disposition des éléments filtrants durant la phase de filtration.

Fig. 4 est une vue semblable à la fig. 3 mais montrant la disposition des éléments filtrants pendant la phase de nettoyage à contre-courant.

Fig. 5 est une vue d'ensemble schématique, simplifiée, en coupe axiale, montrant la circulation du liquide pendant la phase de filtration et durant celle de nettoyage à contre-courant.

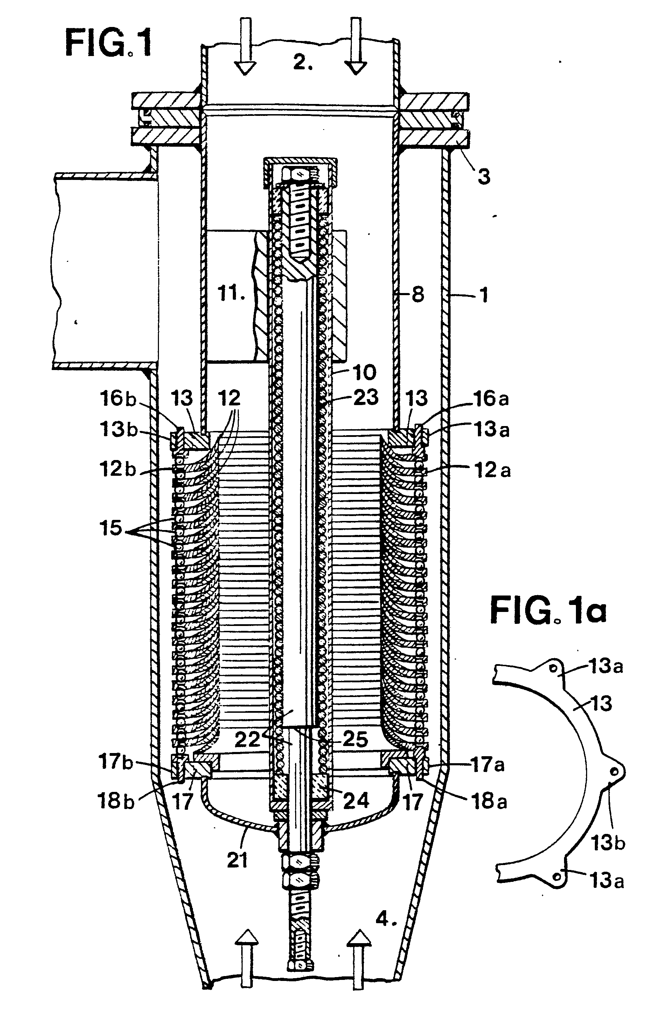

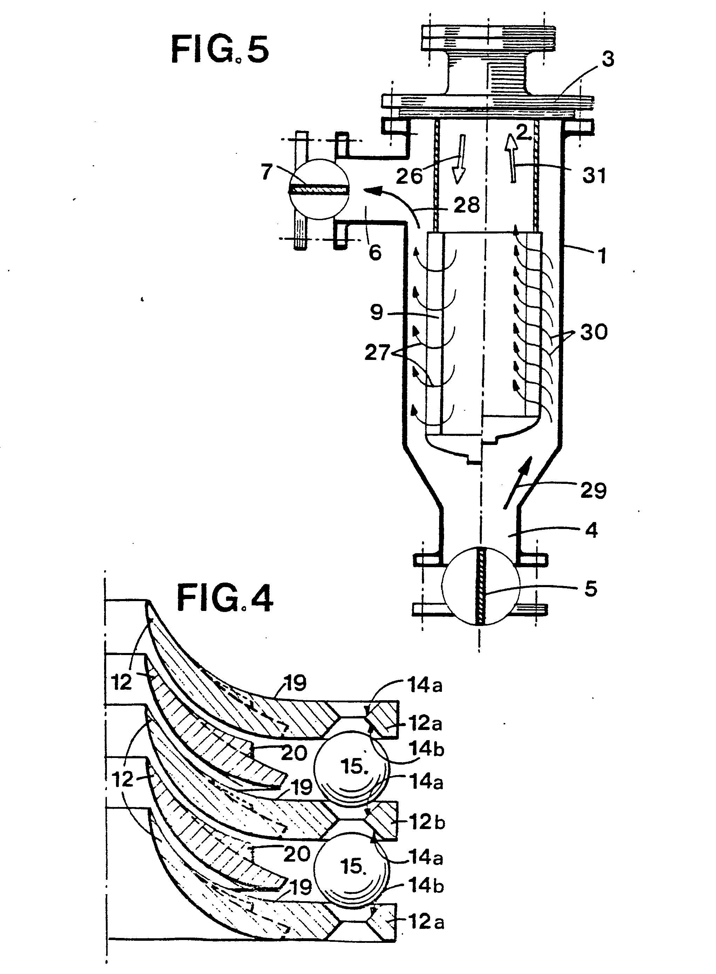

Le filtre représénté comprend une enveloppe 1 de forme générale cylindrique, dont l'une des extrémités, 2 est munie d'une bride 3, tandis que son extrémité opposée, 4, est pourvue d'une vanne 5. Cette enveloppe 1 présente, dans sa région voisine de son extrémité 2, une sortie latérale 6 munie d'une vanne 7 (fig. 1 et 5).

La bride 3 est solidaire d'un tube 8 coaxial avec l'enveloppe 1 et s'étendant sur une partie seulement de la longueur de cette enveloppe, dans la région où se trouve la sortie latérale 6. On voit sur la fig. 1 que la bride 3 ferme, à l'extrémité 2, l'espace compris entre 1 et 8.

A son extrémité éloignée de la bride 3, la cylindre 8 est solidaire d'un corps 9 l'on va décrire en détail.

Un autre cylindre, 10, est fixé coaxialement dans le cylindre 8, au moyen de bras radiaux dont un seul est visible en 11 sur la fig. 1.

Le corps filtrant 9 est formé d'un empilement d'éléments de fitration 12 de forme annulaire, identiques, coaxiaux, constituant un ensemble de forme générale cylindrique solidaire du cylindre 8, grâce à la disposition suivante.

L'extrémité du cylindre 8 opposée à la bride 3 est solidaire d'une plaque annulaire 13 munie extérieurement de six pattes à 60° l'une de l'autre comme le montre la fig. 1a.

Trois de ces si pattes, 13a, sont à 120° l'une de l'autre et les trois autres, 13b, sont intercalées entre les premières (fig. 1a). Les pattes 13a sont munies d'une élément 16a présentant une tête conique dont on expliquera la fonction plus loin, tandis que les pattes 13b présentent une pièce 16b munie d'une tête conique dont on indiquera aussi le rôle plus loin.

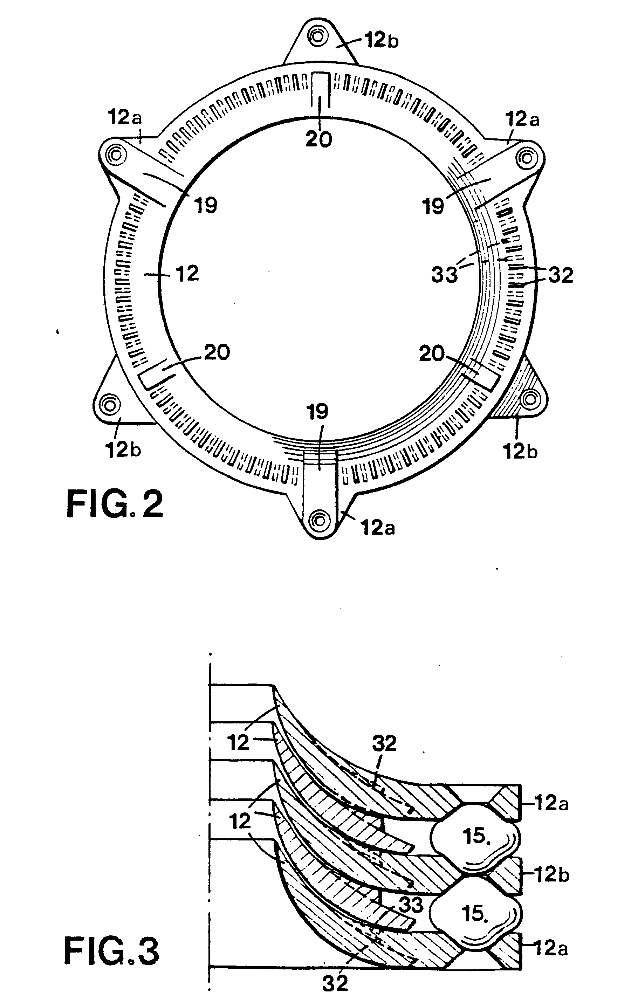

Chaque élément filtrant 12 présente trois pattes extérieures radiales, plates elles aussi, espacées de 120° entre elles. Les éléments 12 successifs sont angulairement décalés de 60° les uns par rapport aux autres. Ainsi, partant par exemple de l'extrémité de l'ensemble filtrant 9 voisine de 13, on voit (fig. 2) le premier élément 12, d'extrémité, avec ses trois pattes extérieures indiquées en 12a. L'élément 12 adjacent est caché par le premier sur la fig. 2, mais on voit ses trois pattes extérieures en 12b. Chacune de ces pattes est de forme plate et se trouve dans un plan perpendiculaire à l'axe de l'appareil et présente, sur chacune de ses deux faces opposées siège conique 14a, 14b (voir fig. 4).

Entre chaque siège conique 14a d'un élément 12, et un siège 14b d'un élément 12 distant axialement de deux pas, est disposée une bille 15 en matière élastique pratiquement incompressible, telle que du caoutchouc. Ainsi, les éléments 12 successifs étant angualirement décalés de 60° conne on l'a vu, il y a, dans un étage quelconque, des billes 15 entre les pattes 12a et dans les étages contigus, des billes 15 entre les pattes 12b.

A l'extrémité du corps 9 adjacente à l'anneau 13, une tête conique d'un élément 16b coopère avec chacun des trois sièges coniques 14a du premier élément 12 de la série tandis qu'un bille 15 est disposée entre le siège conique de chacun des trois éléments 16a et l'un des trois sièges coniques 14a du deuxième élément 12 de la série formant 9.

A l'extrémité opposée de l'ensemble 9, on a une disposition analogue. Un anneau 17 identique à 13 présente six pattes extérieures 17a, 17b distantes angulairement de 60° l'une de l'autre. Trois de ces pattes, 17a, portent un élément 18a présentant une tête conique coopérant avec un siège conique 14b du dernier élément 12. Les trois autres pattes, 17b, portent chacune un élément 18b muni d'un siège conique coopérant avec une bille 15 coopérant par ailleurs avec un siège conique 14a de l'avant-dernier élément 12 de l'ensemble 9.

Chaque élément 12 présente, sur l'une de ses faces, trois nervures 19 situées chacune à l'endroit d'une patte 12a ou 12b, et trois autres nervures 20 intercalaires, si bien que ces six nervures sont espacées angulairement de 60°. La face de ces six nervures se trouvant en regard d'un élément 12 adjacent présente exactement le même profil que l'endroit en regard de cet élément 12 adjacent, de sorte que lorsque l'ensemble 9 est comprimé axialement comme on l'expliquera plus loin, cette face profilée de ces nervures fait butée et s'applique exactement contre la nervure adjacente, limitant ainsi le rapprochement des éléments 12.

L'anneau 17 est solidaire d'une sorte de couvercle circulaire 21 qui ferme l'extrémité inférieure sur la fig. 1 de l'intérieur de l'ensemble 9. Ce couvercle est solidaire, dans sa partie centrale, d'une tige 22 disposée axialement dans le tube 10 et présentant à son extrémité opposée une butée pour une extrémité d'un ressort de compression 23 disposé entre la tige 22 et le tube 10. A son autre extrémité, le ressort 23 appuie contre une butée 24 solidaire du tube 10.

Lorsque la vanne 5 est ouverte et la 7 fermée, le ressort 23 oblige les éléments de filtration 12 à se resserrer en comprimant les billes souples 15 et à venir buter les uns contre les autres, formant ainsi un ensemble filtrant. C'est la phase de filtration. La pression dynamique exercée sur le fond 21 agit dans le même sens que le ressort. Une butée limite la fatigue de l'ensemble filtrant.

Inversement lorsque la vanne 5 est fermée et la 7 ouverte, la pression du liquide filtré agit à contre- courant sur le couvercle 21 et le repousse vers le bas en comprimant le ressort et en décomprimant les billes élastiques 15, ce qui écarte les bagues 12 et libère les impuretés qui auraient pu être retenues dans les fentes pendant la filtration.

Le passage de l'eau et la libération des bagues assurent la vibration de ces dernières et accélère le nettoyage du filtre.

La fig. 4 montre la position relative des éléments 12 lorsque la vanne 5 est fermée et la vanne 7 ouverte, ce qui correspond à la phase de nettoyage à contre-courant. L'eau de nettoyage du filtre arrive alors en 2, pénètre axialement dans l'intérieur de l'ensemble filtrant 9 et passe dans les intervalles annualires entre les éléments 12, pour gagner la sortie auxiliaire 6, la vanne 7 étant ouverte. Les éléments 12 sont alors espacés au maximum et les impuretés qu'ils ont retenues pendant la phase précédente de filtration son facilement emportés par le liquide de nettoyage, ceci d'autant mieux que, les butées 19 et 20 n'étant plus en contact avec l'élément 12 adjacent, ces éléments 12 entrent en vibration sous l'effet du passage de l'eau, ce qui contribue à leur bon nettoyage.

Les flèches 26, 27, 28 (fig. 5) montrent la circulation du liquide de nettoyage dans le filtre pendant la phase de nettoyage.

Pour passer à la phase de filtration, on ouvre la vanne 5 d'arrivée d'eau à filtrer et on ferme la vanne 7 de la sortie auxiliaire de nettoyage, ce qui annule l'inversion de courant et permet au ressort de recomprimer les billes 15 et de rapprocher les bagues 12. Le liquide circule alors dans le filtre comme indiqué par les flèches 29, 30, 31. Comme expliqué plus haut, les éléments 12 sont obligés de se rapprocher au maximum, qui correspond à des passages exactement calibrés entre les éléments 12. Dans le sens de l'écoulement entre les éléments 12, le passage va en se rétrécissant jusqu'à un calibre minimum devant être retenu par le filtre. Les particules les plus fines vont se déposer au fond des passages, là où ils sont les plus étroits, tandis que les plus grosses sont retenues vers l'entrée de ces passages. Il se produit ainsi une stratification des impuretés dans ces passages, selon le calibre de ces impuretés, ce qui améliore la qualité de la filtration.

La forme incurvée des passages entre les éléments 12 assure la retenue 11 d'impuretés minces et rectilignes (petites brindilles droites).

Pour retenir des impuretés dont l'épaisseur serait plus faible que le calibre minimum admis mais qui seraient plates et de dimension plus considérable en largeur, par exemple des feuilles ou des brindilles, il est prévu la disposition suivante.

Des nervures 32 sont prévues sur une face des éléments 12 et des nervures décalées 33 sont prévues sur la face opposée. Ces nervures forment ainsi une sorte de grille retenant les impuretés de très faible épaisseur mais de dimension supérieure dans une autre direction.

Lorsque les éléments 12 sont en position de filtration, les billes 15 sont écrasées et déformées comme le montre la fig. 3. Au moment où l'on passe en phase de nettoyage, l'élasticité de ces billes leur fait reprendre leur forme sphérique, en exerçant, sans friction, une force obligeant les éléments 12 à s'écarter les uns des autres.

Il est à remarquer que la forme des éléments 12, vue en coupe selon un plan par l'axe, est telle que les passages qu'ils offrent au liquide passant à travers eux est oblique par rapport à cet axe, ce qui, comme l'expérience l'a montré, assure, lors du nettoyage, un passage du liquide à travers le filtre, sur toute la longueur de l'ensemble 9. Il n'est donc plus nécessaire de prévoir des déflecteurs à l'intérieur de cet ensemble.

De plus, les butées 19 et 20 empêchent la vibration des éléments 12 pendant la filtration et permettent cette vibration pendant le nettoyage.

On a constaté que le filtre décrit présente l'avantage supplémentaire suivant: A faible vitesse de filtration (par exemple à 10 % de la vitesse nominale), des impuretés très fines, qui à vitesse normale ne seraient pas retenues vu qu'elles sont de dimensions plus petites que la partie la plus étroite entre les éléments de filtration, sont retenues par adsorption à la surface de ces éléments. C'est le même phénomène qu'on constate dans les décanteurs lamellaires.

## Revendications

1. Filtre à anneaux superposés, pour liquides, du type à nettoyage à contre-courant et comprenant une série d'éléments de filtration de forme annulaire, coaxiaux, constituant un ensemble de forme générale cylindrique et laissant entre eux des passages de filtration annulaires, et comprenant des organes d'espacement en matière élastiquement déformable, disposés localement entre les éléments de filtration, et des moyens pour faire varier sans friction la distance entre les éléments de filtration, par variation d'une pression exercée sur les dits organes d'espacement, pour faire passer le filtre du régime de filtration au régime de nettoyage et inversement, le liquide passant entre ces éléments, de la région centrale vers l'extérieur du filtre pendant le nettoyage et en sens inverse pendant la filtration, caractérisé en ce que la partie des éléments filtrants (12) la plus proche de l'axe du filtre présente, vue en coupe axiale, une forme arquée allant en s'amincissant vers son bord interne (fig. 1 et 4) et telle que lesdites parties arquées soient chevauchantes et forment, dans leur partie interne, chacune un déflecteur élémentaire pour le liquide de nettoyage, et ensemble une succession de parois quasi-cylindriques ne laissant entre elles que des passages dont une partie au moins du côté de l'axe du filtre est oblique par rapport à cet axe et dont l'orientation est telle que l'ouverture la plus proche de l'axe du filtre est tournée vers l'extrémité d'arrivée du liquide de nettoyage dans la partie centrale du filtre, pour assurer que, pendant le nettoyage, le liquide s'écoule entre les éléments filtrants de façon pratiquement uniforme sur toute la longueur du filtre, et en ce qu'il comporte, sur chaque élément de filtration (12), des moyens de butée (19, 20) prévus pour appuyer contre un élément de filtration (12) voisin, sous l'effet d'une pression exercée sur ces éléments lorsque le filtre est en régime de filtration, pour, d'une part, assurer exactement l'épaisseur choisie de la fente entre les dits éléments, dans sa partie la plus étroite, et, d'autre part, pour empêcher dans ce régime ces éléments de vibrer sous l'effet de l'écoulement du liquide entre eux, ces butées étant hors de contact avec l'élément de filtration voisin, en régime de nettoyage, et laissant alors ces éléments vibrer pour améliorer le nettoyage.

2. Filtre selon la revendication 1, caractérisé en ce que la distance entre les surfaces en regard des éléments de filtration (12) contigus, va en diminuant, de l'entrée de filtration des passages de filtration à leur sortie, pour assurer une stratification par calibre des impuretés, dans ces passages.

3. Filtre selon la revendication 1, caractérisé en ce que les moyens de butée (19, 20) sont constitués par des nervures prévues sur une des faces de chaque élément de filtration annulaire (12).

4. Filtre selon la revendication 1, caractérisé par des chicanes (32, 33) disposées entre les éléments de filtration (12), constituées par des nervures prévues sur ces éléments et s'étendant dans des plans radiaux par rapport à l'axe du filtre, pour retenir des impuretés de forme plate, ayant une épaisseur inférieure à la distance minimum entre les éléments de filtration et une dimension transversale supérieure à cette distance.

## Patentansprüche

1. Flüssigkeitsfilter mit übereinanderliegenden Ringen zur Reinigung im Gegenstrom mit einer Anzahl koaxialer, ringförmiger Filterelemente, die zusammen einen im allgemeinen zylindrischen Körper bilden und zwischen sich ringförmige Filterdurchlässe offen lassen, bestehend aus Abstandshaltern aus elastisch deformierbarem Material, die lokal zwischen den Filterelementen angeordnet sind, und Mitteln, um ohne Reibung den Abstand zwischen den Filterelementen zu verändern durch Ändern des auf besagte Abstandshalter ausgeübten Druckes, um das Filter aus dem Filtrierzustand in den Reinigungszustand umzustellen und umgekehrt, wobei die Flüssigkeit zwischen den Elementen hindurchtritt aus dem mittleren Teil des Filters nach aussen während der Reinigung und in umgekehrter Richtung während des Filtrierens, dadurch gekennzeichnet, dass der zur Filterachse nächstgelegene Teil der Filterelemente (12), im Axialschnitt gesehen, die Form eines Bogens aufweist, der in Richtung ihrer Innenkante dünner wird (Fig. 1 und 4), dass die besagten bogenförmigen Teile übereinandergreifen und in seinem Innenteil jedes dieser Teile einen Elementardeflektor für die Reinigungsflüssigkeit bildet, und alle zusammen eine Folge von quasizylindrischen Wänden, die untereinander nur Durchlässe freilassen, von denen mindestens ein Teil auf der Filterachse schräg in bezug auf diese Achse liegt und wobei die Orientierung derart ist, dass die zur Filterachse nächstgelegene Öffnung zum Eintrittende der Reinigungsflüssigkeit im Mittelteil des Filters gerichtet ist, um sicherzustellen, dass während des Reinigens die Flüssigkeit zwischen die Filterelemente praktisch gleichmässig über die ganze Filterlänge strömt, und dass es an jedem Filterelement (12) Gegendruckelemente (19, 20) enthält, die dazu bestimmt sind gegen das benachbarte Filterelement (12) zu drücken, unter Wirkung eines auf diese Elemente ausgeübten Druckes während das Filter sich im Filtrierzustand befindet, um einerseits sicherzustellen, dass die gewählte Dicke des Spaltes zwischen besagten Elementen in seinem engsten Teil erreicht wird, und, andererseits, um zu verhindern, dass in besagtem Zustand diese Elemente unter Wirkung der zwischen ihnen strömenden Flüssigkeit vibrieren, und wobei diese Gegendruckelemente ausser Kontakt mit dem benachbarten Filterelement im Reinigungszustand sind und dann ein Vibrieren dieser Elemente zulassen, um die Reinigung zu verbessern.

2. Filter nach Patentanspruch 1, dadurch gekennzeichnet, dass der Abstand zwischen den Oberflächen in bezug auf benachbarte Filterelemente (12) sich vom Filtriereingang der Filtrierdurchlässe zu ihrem Ausgang hin verringert, um eine Schichtung pro Grösse der Verunreinigungen in diesen Durchlässen sicherzustellen.

3. Filter nach Patentanspruch 1, dadurch gekennzeichnet, dass die Gegendruckmittel (19, 20) aus Rippen auf der Vorderseite eines jeden ringförmigen Filtrierelementes (12) bestehen.

4. Filter nach Patentanspruch 1, gekennzeichnet durch Auffanghindernisse (32, 33), die zwischen den Filtrierelementen (12) angeordnet sind und aus Rippen bestehen, die auf diesen Elementen angeordnet sind und sich in den zur Filterachse radialen Ebenen erstrecken, um Verunreinigungen, die eine fläche Form haben, zurückzuhalten, und wobei sie eine Dicke haben, die kleiner ist als der Minimalabstand zwischen den Filterelementen, und deren Querabmessung grösser als dieser Abstand ist.

## Claims

1. A filter with superimposed rings, for liquids, of the type with countercurrent cleaning and comprising a series of coaxial filter elements of annular shape, forming a unit of cylindrical general shape and leaving annular filtering passages between them, and comprising spacing members made of elastically deformable material, arranged locally between the filter elements, and means for varying the distance between the filter elements, without friction, by varying a pressure exerted on the said spacing members, in order to switch the filter from the filtration mode to the cleaning mode and vice-versa, the liquid passing between these elements from the central region towards the outside of the filter during cleaning and in the opposite direction during filtration, characterized in that, viewed in axial section, the part of the filter elements (12) which is nearest to the axis of the filter is in the shape of an arc which becomes thinner towards its inner edge (Fig. 1 and 4) and is such that the said arc-shaped parts overlap and, in their inner part, individually form an elementary deflector for the cleaning liquid and together form a succession of quasi-cylindrical partitions which only leave between them passages of which at least a part, near the axis of the filter, is oblique relative to this axis, and of which the orientation is such that the opening nearest to the axis of the filter faces the end at which the cleaning liquid enters the central part of the filter, in order to ensure that, during cleaning, the liquid flows between the filter elements in a practically uniform manner over the whole length of the filter, and in that, on each filter element (12), the said filter has means of abutment (19, 20) designed to rest against an adjacent filter element (12) under the effect of a pressure exerted on these elements when the filter is in the filtration mode, on the one hand to ensure that the thickness of the slot between the said elements, in its narrowest part, is exactly as chosen, and on the other hand to prevent these elements from vibrating, in this mode, under the effect of the flow of the liquid between them, these abutments being out of contact with the adjacent filter element in the cleaning mode, thereby allowing these elements to vibrate in order to improve cleaning.

2. The filter according to Claim 1, characterized in that the distance between the opposite surfaces of the contiguous filter elements (12) decreases from the filtration inlet of the filtering passages to their outlet, in order to ensure that the impurities are layered according to size in these passages.

3. The filter according to Claim 1, characterized in that the means of abutment (19, 20) consist of ribs provided on one of the faces of each annular filter element (12).

4. The filter according to Claim 1, characterized in that there are baffles (32, 33) arranged between the filter elements (12), consisting of ribs provided on these elements and running in radial planes relative to the axis of the filter, in order to retain flat- shaped impurities, their thickness being less than the minimum distance between the filter elements and their transverse dimension being greater than this distance.

FIG.1

FIG. 1a

**FIG. 2**

**FIG. 3**

0 159 961

3

FIG. 5

FIG. 4